# EUROPÄISCHE PATENTSCHRIFT

(11) **EP 0 935 919 B1**
(45) Veröffentlichungstag und Bekanntmachung des Hinweises auf die Patenterteilung: **23.10.2002**
(21) Anmeldenummer: 99102654.3
(22) Anmeldetag: 12.02.1999
(51) Int. Cl.: A22C 7/00

(54) **Umformpresse für tiefgefrorene Lebensmittelportionen**
Forming press for portions of frozen foodstuffs
Presse de formage de portions de denrées alimentaires surgelées

(30) Priorität: 17.02.1998 DE 19806391
(43) Veröffentlichungstag der Anmeldung: 18.08.1999
(73) Patentinhaber: Nienstedt GmbH, 45721 Haltern (DE)
(72) Erfinder: Rosenberger, Jörg, 48734 Reken (DE); Book, Franz, 45721 Haltern (DE)
(74) Vertreter: COHAUSZ DAWIDOWICZ HANNIG & PARTNER

(56) Entgegenhaltungen:
- EP-A- 0 057 478
- BE-A- 902 360
- DE-A- 1 911 665
- DE-A- 2 256 078
- US-A- 4 474 823

## Beschreibung

Die Erfindung betrifft eine Umformpresse für tiefgefrorene Lebensmittelportionen, insbesondere Fisch, mit einer mehrteiligen, einen Formhohlraum bildenden Preßform und einer auf die Formenteile einwirkenden, auf Preßhub und Rückhub steuerbaren Zylindereinheit, wobei der Formhohlraum von einem eine Formmulde mit einem sie begrenzenden zylinderförmigen Rand aufweisenden Unterteil und einem in den Formhohlraum mit randseitigem Paßsitz gegenüber dem zylinderförmigen Rand nach Art eines Deckels eintauchenden Oberteil gebildet wird.

Umformpressen werden in der Lebensmittelindustrie eingesetzt, um aus einem tiefgefrorenen großen Block hergestellte kleine, quaderförmige tiefgefrorene Portionen mit einem möglichst exakten vorgegebenen Gewicht in eine für den Verbraucher ansprechende Form, insbesondere in eine dem natürlichen Produkt entsprechende Form, zum Beispiel bei Fisch in eine Filetform, zu bringen. Dieser Umformvorgang soll zur Erhaltung der Qualität des Produktes möglichst schonend erfolgen. Das bedeutet, daß das Produkt mit dem geringsten Druck beaufschlagt werden sollte, der für das Umformen und vollständige Ausfüllen des Formhohlraums der Preßform notwendig ist. Da das Gewicht und damit auch das Volumen der umzuformenden Portion vom vorgegebenen Sollwert nach unten und oben in einer zulässigen Bandbreite schwankt, ist es schwierig, die beiden Zielsetzungen eines geringen Preßdruckes und der vollständigen Ausfüllung des Formhohlraums gleichzeitig zu erfüllen. Besonders nachteilig für den Lebensmittelproduzenten ist es, wenn es zu einem Überpressen kommt, weil dadurch nicht nur die Qualität leidet, sondern damit in der Regel auch ein Gewichtsverlust verbunden ist. Beim Überpressen wird nämlich im Produkt enthaltene Flüssigkeit ausgepreßt und geht so verloren.

Eine weitere Schwierigkeit bei der industriellen Produktion besteht darin, daß bei einer Fertigungsstraße, in der die Umformpresse integriert ist, eine vorgegebene Taktzeit nicht überschritten werden darf. Bei einer Taktzeit von üblicherweise 3 sec stehen für den Transport zu und von der Umformstation nur 0,5 sec zur Verfügung. In den verbleibenden 2,5 sec muß dann der Umformvorgang abgeschlossen sein. Ein Nachpressen bis zum Erreichen eines bestimmten höheren Druckes schafft wegen der dafür benötigten unbestimmten Zeit Probleme bei dem Einhalten der Taktzeit.

Bei einer bekannten Umformpresse (GB-PS 1 293 169) besteht die Umformpresse aus zwei Formteilen, und zwar aus einem flachen Unterteil, das von einem in einem flachen Widerlager abgestützten Transportband gebildet wird, und einem muldenförmigen Oberteil. Bei dieser Formpresse wird das Oberteil auf das Unterteil bis zum Anschlag abgesenkt. Dabei wird eine auf dem Unterteil abgelegte, quaderförmige Lebensmittelportion in eine gewünschte Form mit einer gewölbten Oberseite und einer flachen Unterseite gepreßt. Bei einem solchen Umformvorgang ist der angewendete Preßdruck nicht vorherbestimmbar. Ist die Portion für den Formhohlraum zu groß, wird sie überpreßt und Flüssigkeit wird herausgepreßt und fließt über das flache Unterteil seitlich ab und ist damit verloren, so daß die formgepreßte Portion möglicherweise den behördlich zugelassenen Toleranzbereich für das vorgeschriebene Gewicht unterschreitet. Ist die Portion dagegen zu klein, dann wird der Formhohlraum nicht ausgefüllt und die Portion hat nicht die gewünschte Form.

Neben dieser druckschriftlich bekannten Umformpresse gibt es eine in der Praxis eingesetzte Umformpresse, die im Aufbau sehr ähnlich ist. In diesem Fall besteht die Umformpresse aus drei Teilen, und zwar einem flachen Unterteil, einem ortsfesten Randteil und einem muldenförmigen Oberteil. Das Unterteil sitzt paßgenau in dem Randteil und ist höhenbeweglich, so daß es zur Beschickung mit einer quaderförmigen Position in dem Randteil hochfahrbar ist und mit der Oberseite des Randteils bündig abschließt. Das muldenförmige Oberteil ist ebenfalls beweglich und kann in das Randteil paßgenau eingetaucht werden. Nachdem das Unterteil mit der darauf abgelegten, quaderförmigen Portion abgesenkt ist, wird das Oberteil abgesenkt und die Portion formgepreßt. Das Oberteil wird dabei bis auf einen Anschlag abgesenkt. Bei dieser in der Praxis eingesetzten Formpresse ergeben sich wie bei der vorbeschriebenen, druckschriftlich bekannten Formpresse die gleichen Nachteile aus den gleichen Gründen.

Bei einer anderen bekannten Umformpresse der eingangs genannten Art (US-PS 5,631,035) wird ein tiefgefrorener Block aus mehreren Fleischportionen unterschiedlicher Form, die zunächst in einer ersten Form übereinandergelegt und zu einer Vorform leicht zusammengepreßt und dann tiefgefroren wurden, in eine zweiten Form, der Formpresse, eingebracht und hier mit hohem Preßdruck zusammengepreßt. Der Preßdruck kann dabei in weiten Bereichen (500 bis 10.000 p.s.i.) variieren. Dabei kommt es nur darauf an, daß der lange Block über seine gesamte Länge einen gleichen Querschnitt erhält, damit in einem anschließenden Schneidvorgang einzelne Scheiben gleicher Form abgeschnitten werden können. Den Problemen eines Überpressens, der Einhaltung eines genauen Gewichtes etc. wird dabei keine Aufmerksamkeit geschenkt.

Darüber hinaus ist eine Schneidvorrichtung für Gefriergut (DE 30 45 065 A1) bekannt. Bei dieser Schneidvorrichtung wird das Schneidwerkzeug mit einer pneumatischen oder hydraulischen Zylinderkolbeneinheit angetrieben. Um die Vorrichtung vor Überlastung zu schützen, wird der Arbeitsdruck überwacht. Bei Überschreiten eines vorgegebenen Druckes wird die Schneidvorrichtung umgesteuert.

Der Erfindung liegt die Aufgabe zugrunde, eine Formpresse zu schaffen, die einen möglichst schonenden Umgang mit dem Lebensmittelprodukt gewährleistet, bei der es durch den Umformvorgang zu keinem Gewichtsverlust kommt und die auch bei im Toleranzbereich schwankenden Portionsgewichten ein vollständiges Ausfüllen des Formhohlraums gewährleistet.

Diese Aufgabe wird bei einer Formpresse der eingangs genannten Art dadurch gelöst, daß der Preßhub und der Rückhub der Zylindereinheit mit einer Steuereinheit nach einem einstellbaren Programm derart druck- und zeitüberwacht ist, daß bei Erreichen eines bestimmten Preßdruckes die Zylindereinheit entweder sofort oder nach einer einstellbaren Nachsetzzeit, in der der Preßdruck weiter erhöht wird, auf Rückhub umgesteuert wird.

Bei der erfindungsgemäßen Umformpresse wird durch die erfahrungsgemäß für den Normalfall richtige Einstellung des Preßdruckes für eine bestimmte Lebensmittelportion gewährleistet, daß es nicht zu einem Überpressen der Portion kommt. Zu einem Gewichtsverlust kann es selbst bei einem Überpressen nicht kommen, weil eventuell aus der Portion herausgedrückte Flüssigkeit in der Formmulde verbleibt und aufgrund der tiefen Temperatur der Lebensmittelportion an ihrer Oberfläche wieder anfriert. Da mit dem erfahrungsgemäßen eingestellten Preßdruck in der Regel der Formhohlraum vollständig ausgefüllt wird, erhält man beim Einsatz der erfindungsgemäßen Formpresse ein in der Form und der Qualität optimales Produkt mit vorgeschriebenem Gewicht. Sollte sich beim Einsatz der Umformpresse allerdings herausstellen, daß der erfahrungsgemäß eingestellte Preßdruck für die eingesetzten Portionen nicht ausreicht, um den Formhohlraum vollständig auszufüllen, was verschiedene Gründe haben kann, dann hat die Bedienungsperson die Möglichkeit, den Preßdruck weiter zu erhöhen und zwar über die Nachsetzzeit. Das Einstellen eines höheren Druckes über die Nachsetzzeit ist wichtig, weil nur so gewährleistet werden kann, daß der Takt der Maschine, im oben beschriebenen Beispiel 2,5 sec, nicht überschritten wird. Die Einhaltung dieser Taktzeit ist möglich, weil nach praktischen Erfahrungen das Erreichen des vorbestimmten Preßdruckes innerhalb einer bestimmten Zeit bei jeder Art von Produkt sichergestellt werden kann. Davon abgesehen sieht auch die Bedienungsperson, welche Zeit für das erforderliche Nachsetzen nach Erreichen des Preßdruckes bis zum Ende der Taktzeit von zum Beispiel 2,5 sec noch verbleibt.

Um die verhältnismäßig kurze Taktzeit für das Umformen einhalten zu können, ist nach einer Ausgestaltung der Erfindung vorgesehen, daß die Zylindereinheit einen Doppelzylinder umfaßt, der einen für einen Eilvorhub und einen Eilrückhub mit Druckluft doppelseitig beaufschlagbaren Teil und einen dazu in Reihe liegenden hydraulischen Teil aufweist, in dessen während des Preßhubes druckbeaufschlagten, nach außen abgeschlossenen Zylinderraum ein von einem preßluftbeaufschlagten Kolben angetriebener Verdränger eintaucht, dessen wirksame Kolbenfläche ein Vielfaches kleiner als die des auf die Preßform einwirkenden Kolbens ist. Bei dieser Kombination von pneumatisch und hydraulisch beaufschlagbarer Zylindereinheit wird ein schneller Vor- und Rückhub erreicht und über die Druckübersetzung vom pneumatischen Teil auf den hydraulischen Teil ein hoher Druck aufgebaut.

Im folgenden wird die Erfindung anhand einer ein Ausführungsbeispiel darstellenden Zeichnung näher erläutert.

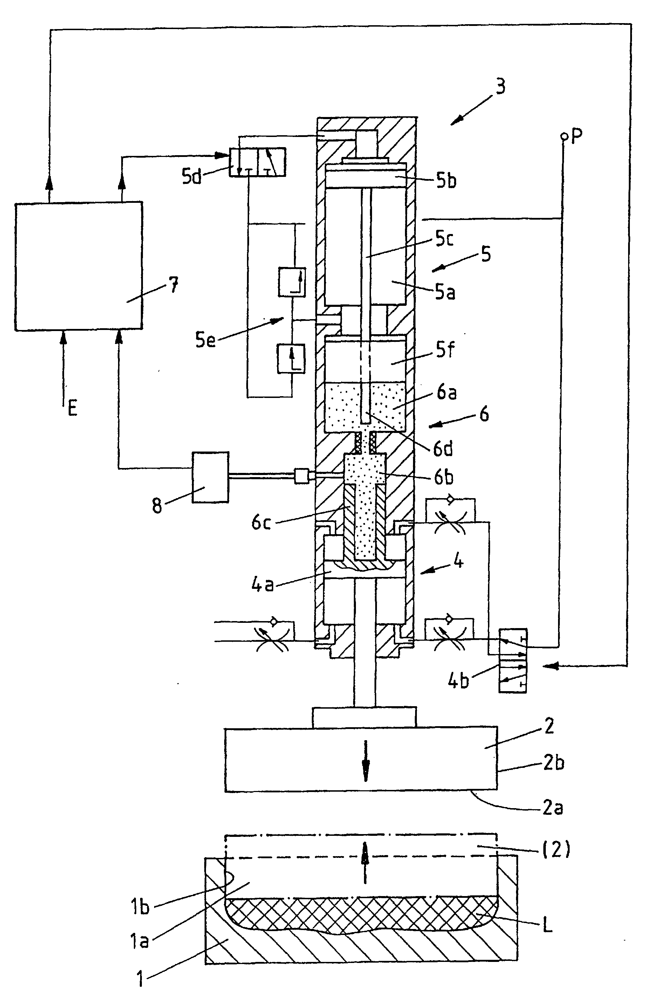

In der Zeichnung ist schematisch eine Formpresse dargestellt und in mehr Detail eine auf die Formpresse einwirkende kombiniert pneumatisch und hydraulisch arbeitende Zylindereinheit.

Die Formpresse besteht aus einem muldenförmigen Unterteil 1 mit einem Formhohlraum 1a, dessen Formmulde an der Seite von einem zylindrischen Rand 1b begrenzt wird. Die Form des Formhohlraums 1a bestimmt die Form des gewünschten Endproduktes, zum Beispiel kann sie bei einer Fischportion L die Form eines Fischfilets haben. Die Umformpresse umfaßt ferner ein Oberteil 2 mit flacher oder nur leicht profilierter Unterseite 2a, das in den Formhohlraum 1a absenkbar ist. Das Oberteil 2 hat einen zylindrischen Außenrand 2b, der in seinen Dimensionen dem Rand 1b des Unterteils 1 entspricht. Es kann deshalb paßgenau in den Formhohlraum 1a abgesenkt werden. Diese Paßgenauigkeit gewährleistet, daß sich beim Umformen an den Rändern der Portion L keine Stege bilden.

Der Vor- und Rückhub des Oberteils 2 erfolgt mittels einer Zylindereinheit 3. Die Zylindereinheit 3 besteht aus einem Doppelzylinder. Ein Zylinder 4 weist einen doppelseitig mit Preßluft beaufschlagten Kolben 4a auf, der unmittelbar auf das Oberteil 2 einwirkt. Ein anderer Zylinder 5,6 besteht aus einem pneumatischen und hydraulischen Teil und ist als Übersetzer ausgebildet. Der pneumatische Teil weist in einem Zylinderraum 5a einen doppelseitig mit Druckluft beaufschlagbaren Kolben 5b auf, der eine bis in den hydraulischen Teil 6 reichende Kolbenstange 5c trägt. Die Druckbeaufschlagung des Kolbens 5b erfolgt über ein Umsteuerventil 5d. Über eine sogenannte Luftfeder 5e wird der Zylinderraum 5a unter einem vorgegebenen Druck gehalten. Dieser Druck beaufschlagt einen zwischen dem pneumatischen Teil 5 und dem hydraulischen Teil 6 frei beweglichen Kolben 5f. Dieser Kolben 5f schließt einen mit Hydraulikflüssigkeit gefüllten Zylinderraum 6a ab, der als Puffer für einen davon getrennten mit Flüssigkeit gefüllten Zylinderraum 6b dient, in den ein als Verlängerung der Kolbenstange 5c ausgebildeter Verdränger 6d mit seinem Ende hereinragt. In diesem Zylinderraum 6b liegt auch ein Kolben 6c, der fest mit dem Kolben 4a verbunden ist. Die beaufschlagbare Fläche dieses Kolbens 6c ist im Vergleich zur Kolbenfläche des Verdrängers 6d gering. Dadurch ergibt sich bei Beaufschlagung des Kolbens 5b und der dadurch bedingten Verstellung des Verdrängers 6d eine Verstellung des Kolbens 6c mit Übersetzung und damit auch eine Verstellung des Unterteils 2, so daß das Unterteil 2 mit der für den Umformvorgang erforderlichen hohen Preßkraft auf kurzem Stellweg beaufschlagt wird. Die gewünschte Preßstellung des Unterteils 2 ist in der Zeichnung strichpunktiert angedeutet.

Eine Steuereinrichtung 7 steuert den Stellvorgang. Dazu erhält sie von einer Drucküberwachung 8 für den Zylinderraum 6b ein Stellsignal, wenn ein voreingestellter Druck erreicht wird. Dieses Signal veranlaßt die Steuereinrichtung, die Zylindereinheit 3 von Preßhub auf Eilrückhub umzuschalten, indem das Umsteuerventil 4b und das Ventil 5d umgesteuert werden. Sollte die Bedienungsperson durch Augenscheinnahme feststellen, daß das formgepreßte Produkt L nicht optimal ist, weil der Formhohlraum 1a nicht vollständig ausgefüllt wurde, dann besteht die Möglichkeit, über eine Eingabe E die Steuereinrichtung 7 auf eine erfahrungsgemäß geeignete Nachsetzzeit einzustellen. In diesem Fall wird bei Erreichen des eingestellten Druckes und Signalgabe durch den Druckmesser 8 nicht auf Rückhub umgeschaltet, sondern der Druck durch weitere Beaufschlagung des Kolbens 5b weiter erhöht. Erst am Ende der Nachsetzzeit veranlaßt die Steuereinrichtung 7 durch die Umschaltung der Ventile 4b,4d die Steuereinrichtung 3, auf Rückhub umzuschalten.

## Patentansprüche

1. Umformpresse für tiefgefrorene Lebensmittelportionen, insbesondere Fisch, mit einer mehrteiligen, einen Formhohlraum (1a) bildenden Preßform (1,2) und einer auf die Formenteile (1,2) einwirkenden auf Preßhub und Rückhub steuerbaren Zylindereinheit (3), wobei der Formhohlraum (1a) von einem eine Formmulde mit einem sie begrenzenden zylinderförmigen Rand (1b) aufweisenden Unterteil (1) und einem in den Formhohlraum (1a) mit randseitigem Paßsitz gegenüber dem zylindrischen Rand (1b) nach Art eines Deckels eintauchenden Oberteil (2) gebildet wird,
**dadurch gekennzeichnet, daß** der Preßhub und der Rückhub der Zylindereinheit (3) mit einer Steuereinheit (7) nach einem einstellbaren Programm derart druck- und zeitüberwacht ist, daß bei Erreichen eines bestimmten Preßdruckes die Zylindereinheit (3) entweder sofort oder nach einer einstellbaren Nachsetzzeit, in der der Preßdruck weiter erhöht wird, auf Rückhub umsteuerbar ist.

2. Umformpresse nach Anspruch 1,
**dadurch gekennnzeichnet,** daß die Zylindereinheit (3) einen Doppelzylinder umfaßt, der einen für einen Eilvorhub und einen Eilrückhub mit Druckluft doppelseitig beaufschlagbaren Teil (4) und einen dazu in Reihe liegenden hydraulischen Teil aufweist, in dessen während des Preßhubes druckbeaufschlagten, nach außen abgeschlossenen Zylinderraum (6b) ein von einem preßluftbeaufschlagten Kolben (5b) angetriebener Verdränger (6d) eintaucht, dessen wirksame Kolbenfläche ein Vielfaches kleiner als die des auf die Preßform (1,2) einwirkenden Kolbens (6c) ist.

## Claims

1. Forming press for frozen food portions, in particular fish, with a composite press mould (1, 2) forming a mould cavity (1a) and a cylinder unit (3), controllable in its pressing stroke and return stroke, acting on the mould parts (1, 2), wherein the mould cavity (1a) is formed by a bottom die (1) having a mould hollow bounded by a cylindrical rim (1b) and a top die (2) plunging into the mould cavity (1a) in the fashion of a lid, with a snug peripheral fit against the cylindrical rim (1b),
**characterized in that** the pressing stroke and return stroke of the cylinder unit (3) are monitored as to pressure and time by a control unit (7) in accordance with an adjustable programme so that upon reaching a specified forming pressure the cylinder unit (3) is switchable to return stroke either immediately or after an adjustable dwell time during which the forming pressure is further increased.

2. Forming press according to Claim 1,
**characterized in that** the cylinder unit (3) comprises a double cylinder which has a double-sided part (4) pneumatically operable from either side for rapid forward motion and rapid return motion and, in line therewith, a hydraulic part into whose externally closed cylinder chamber (6b), pressurized during the pressing stroke, a displacer (6d) driven by a pneumatically operated piston (5b) plunges, the effective piston area of the displacer (6d) being several times smaller than that of the plunger (6c) acting on the press mould (1, 2).

## Revendications

1. Une presse de formage de portions de denrées alimentaires surgelées, en particulier de poisson, dotée d'un moule (1, 2) de presse, qui présente plusieurs éléments et forme un creux (1a) de moule, et un ensemble vérin (3), qui agit sur les éléments du moule (1, 2) et peut être commandé en termes de course de pressage et course de retour, cependant que le creux (1a) de moule est constitué d'un élément (1) inférieur, qui présente une cavité de moule pourvue d'une délimitation (1b) en forme de cylindre, et d'un élément (2) supérieur, qui plonge dans le creux (1a) de moule, à la manière d'un couvercle, avec un jeu d'ajustement côté délimitation par rapport à la délimitation (1b) cylindrique,
**caractérisé en ce que** la course de pressage et la course de retour de l'ensemble vérin (3) est surveillée, en termes de pression et de temps, en fonction d'un programme réglable, par une unité de contrôle (7) de façon à ce que, dès qu'une pression de pressage prédéterminée est atteinte, l'ensemble vérin (3) puisse être commandé à prendre sa course de retour, soit immédiatement, soit après un temps de retard réglable, pendant lequel la pression de pressage continue de croître.

2. Une presse de formage conforme à la revendication n° 1, **caractérisé en ce que** l'ensemble vérin (3) comprend un vérin double, qui présente une partie (4), qui peut être soumise des deux côtés à de l'air comprimé pour une course de pressage rapide et une course de retour rapide, et une partie hydraulique, disposée en ligne avec la précédente, où un élément de refoulement (6d), entraîné par un piston (5b) sollicité par l'air de pressage et présentant une surface de piston utile est plusieurs fois inférieure à celle du piston (6c) agissant sur le moule (1, 2) de presse, plonge dans la chambre (6b) de vérin, laquelle est sollicitée par la pression pendant la course de pressage et est fermée vers l'extérieur.
